# FASCICULE DE BREVET EUROPEEN

(11) **EP 0 761 280 B1**
(45) Date de publication et mention de la délivrance du brevet: **09.02.2005**
(21) Numéro de dépôt: 96630030.3
(22) Date de dépôt: 30.04.1996
(51) Int. Cl.: B01D 46/04, B01D 46/24

(54) **Système pour le nettoyage d'éléments filtrants tubulaires**
System zum Reinigen rohrförmiger Filterelemente
System for cleaning tubular filter elements

(30) Priorité: 05.09.1995 LU 88650
(43) Date de publication de la demande: 12.03.1997
(73) Titulaire: IDR HOLDING S.A., 2960 Luxembourg (LU)
(72) Inventeur: Ferrari, Gian Carlo, 41019 Soliera/Modena (IT)
(74) Mandataire: Waxweiler, Jean

(56) Documents cités:
- WO-A-93/13845
- FR-A- 1 118 340
- FR-A- 2 146 383
- US-A- 3 680 285
- US-A- 3 850 200
- US-A- 4 077 781
- US-A- 4 157 899

## Description

L'invention concerne un système pour le nettoyage d'éléments filtrants tubulaires, c'est à dire un ensemble de dispositifs pour nettoyer des unités filtrantes, par exemple à manches, ou à poches ou à cartouches, généralement installés dans des silos qui contiennent des substances en grains ou en poudre.

L'état actuel de la technique comprend des systèmes pour le nettoyage d'unités filtrantes, installées par exemple sur des conteneurs de substances semi-liquides, acheminées de façon pneumatique, comprenant un réservoir de fluide pressurisé, par exemple de l'air, pour le lavage des éléments filtrants communiquant avec la section de sortie de ces derniers à travers un ensemble de soupapes électriques contrôlées par un fiche électronique où la séquence de nettoyage est mémorisée: chaque élément filtrant est traversé de façon cyclique par le fluide de lavage contenu dans le dit réservoir en sens inverse par rapport à celui de passage programmé pendant le fonctionnement normal.

En cas d'applications anti-déflagrantes, les soupapes électriques sont remplacées par des groupes pneumatiques d'accumulation et de distribution du fluide de lavage très complexes et très coûteux.

En outre, de tels systèmes de nettoyage sont complexes et coûteux aussi à cause du fait que la structure du réservoir d'accumulation du fluide de lavage doit être spécialement projeté lors de chaque instalation, en fonction du nombre et de la disposition des éléments filtrants. Une structuré aussi complexe, due à la nécessité de prévoir un orifice de jumelage du corps de chaque soupape électrique au corps du réservoir, implique que le réservoir soit très grand, ce qui entraîne une perte d'espace et une augmentation des coûts.

En effet, pour un même volume d'air nécessaire au nettoyage d'un seul élément filtrant, du moment que tous les éléments filtrants doivent être traversés par un jet de fluide de lavage, la nécessité d'installer un ensemble d'orifices pour les jumeler aux soupapes de distribution correspondantes implique une plus grande capacité du réservoir.

En outre, au moment de l'installation, il est nécessaire de procéder à des phases distinctes de montage du réservoir et des soupapes correspondantes avec le circuit de contrôle électrique ou pneumatique.

Dans la publication US-A-3 680 285, un filtre pour gaz est décrit comprenant un ensemble de filtre disposés en rangées adjacentes. Un collecteur pour alimenter de l'air de lavage est prévu au-dessus de chaque rangée de filtres. Les filtres y sont raccordés. Chaque collecteur est raccordé par une soupape à un coffre commun d'air sous pression. Un coffre commun peut être prévu par groupe de trois soupapes. Le coffre commun ou chacun des coffres commun est relié à un réservoir d'air sous pression.

Dans la publication FR-A-2 146 363 une installation pneumatique de dépoussiérage est décrite comprenant un mécanisme d'actionnement à cliquet et dents de scie disposées sur un élément circulaire, permettant de transposer un mouvement de va-et-vient en mouvement rotatoire pas à pas.

Cet état antérieur de la technique peut subir d'importante améliorations surtout dans le but d'éliminer les inconvénients indiqués ci-dessus.

D'après ce qui précède, il est nécessaire de résoudre le problème technique de trouver un appareil pour le nettoyage d'éléments filtrants tubulaires où la structure du réservoir contenant le fluide de lavage soit grandement simplifié et qui puisse aussi être utilisé en cas de systèmes anti-déflagrants.

Un autre aspect du problème technique réside dans la nécessité de simplifier le montage d'appareils de nettoyage d'éléments filtrants à contre-courant.

L'invention résout ce problème technique grâce à un système où la structure du réservoir contenant le fluide de lavage des filtres tubulaires est à éléments et comprend un ensemble d'éléments de réservoir, communiquant entre eux et accouplés chacun à un corps de soupape de distribution de fluide de lavage; le dit réservoir étant obtenu après le montage, de préférence à paquet, des dits corps de soupapes.

Ceci permet de réaliser un réservoir, ou tout au moins une partie importante de celui-ci, simultanément au montage des soupapes de distribution du fluide de lavage et sans perte d'espace.

Selon une version particulièrement avantageuse, un réservoir supplémentaire est prévu, celui-ci étant relié au dit réservoir de fluide de lavage et ayant des dimensions standardisées; il doit être utilisé dans le cas où il serait nécessaire d'augmenter la capacité du réservoir principal.

Ceci permet d'augmenter le volume du fluide de lavage disponible pour le nettoyage des éléments filtrants sans devoir recourir à des dispositions spéciales.

Selon une version particulièrement avantageuse, chaque dite soupape de distribution présente deux entrées et une sortie du fluide de lavage; le dit élément de réservoir étant installé entre les deux entrées et communiquant avec elles.

Ceci permet d'obtenir une structure particulièrement compacte et simple à réaliser.

Selon une autre version avantageuse, chaque élément de réservoir est obtenu par une chambre annulaire obtenue en position coaxiale externe par rapport à un conduit de distribution du fluide de lavage, la dite chambre annulaire étant dotée d'au moins une ouverture pour le passage du fluide de lavage de et vers une chambre annulaire correspondante d'au moins une ultérieure soupape analogue adjacente.

Ceci permet une ultérieure économie de place et une importante réduction des coûts.

Selon une autre version avantaguese, le dit conduit de distribution du fluide de lavage présente une extrémité interne que l'on peut faire communiquer avec la dite chambre annulaire, entre la dite chambre annulaire et la dite extrémité interne, une membrane élastique obturatrice du dit conduit est installée; dite membrane est actionnée de façon pneumatique afin de s'éloigner de la dite extrémité pour consentir le passage du fluide de lavage contenu dans le dit réservoir.

Ceci a pour autre avantage de garantir une sécurité de fonctionnement de façon très simple et fonctionnelle.

Selon une version particulièrement avantageuse, la membrane obturatrice est rendue flottante dans une chambre auxiliaire dotée de moyens de distribution pneumatiques éloignés comprenant un ensemble de soupapes d'interception dotées chacune d'un élément d'interception flottant.

Ceci a pour avantage de rendre compatible le système avec les moyens de distribution anti-déflagrants correspondants.

Selon une autre version avantageuse, les dits moyens de distribution sont constitués d'un rotor, ayant avantaguesement la forme d'un disque, doté d'un prolongement destiné à interférer en succession aux éléments d'interception de chacune des dites soupapes d'interception.

Selon une autre version avantageuse, le dit rotor est jumelé à des moyens d'entraînement, avantageusement constitués par un cinématisme à encliquetage associé à des moyens pneumatiques alternatifs.

Le cinématisme à encliquetage peut être constitué par une roue munie à sa périphérie de dents déformables insérées de façon élastique grâce à un léger forcement dans une enveloppe de laquelle dépasse un élément anti-retour interférant avec les dents de la dite roue.

Les moyens pneumatiques alternatifs peuvent être constitués par un cylindre pneumatique avec piston monté entre les moyens élastiques de contraste et une chambre d'accumulation d'un fluide de commande, par exemple de l'air pressurisé: la dite chambre d'accumulation étant munie, au niveau d'une section axiale correspondant à la course maximum du piston, d'un passage d'écoulement du fluide de commande de la dite chambre d'accumulation pour le pilotage d'une soupape d'écoulement du fluide de commande hors de la chambre même.

Ceci a pour avantage de rendre le système de nettoyage complètement antidéflagrant et en outre cela permet de réaliser des moyens entièrement pneumatiques pour l'actionnement alternatif intermittent d'un organe conduit en général.

D'ultérieurs caractéristiques et avantages apparaîtront dans la description suivante en référence, à simple titre d'exemple, au six tables de dessin ci joints, où:

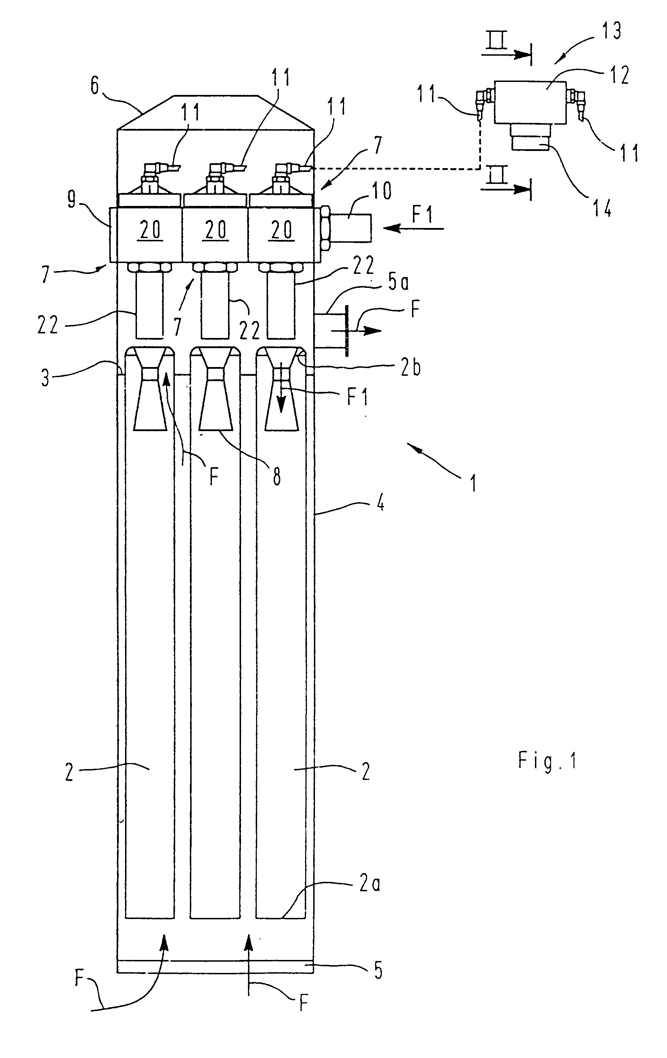

La Figure 1 est une vue latérale schématique interrompue d'un système pour le nettoyage à contre-courant de filtres tubulaires;
la Figure 2 est la section ll-ll, agrandie de la Figure 1;
la Figure 3 est la section III-III de la Figure 2, où les moyens de distribution sont mis en évidence;
la Figure 4 est une section longitudinale d'un groupe de soupapes de distribution du fluide de lavage, montées en paquets;
la Figure 5 est une vue en plan d'une soupape de distribution;
la Figure 6 est la section VI-VI déviée de la Figure 5;
la Figure 7 est une vue comme celle de la Figure 4, dans une version de système avec réservoir supplémentaire;
la Figure 8 est une section longitudinale d'un dispositif pour l'actionnement en rotation intermittente des moyens de distribution de la Figure 3,avec soupape d'écoulement en position de fermeture;
la Figure 9 est une section comme celle de la Figure 8, mais partielle et interrompue, mettant en évidence la soupape d'écoulement en position d'ouverture.

Le système de nettoyage 1 est destiné au lavage de filtre à manches 2 fixés à une plaque supérieure 3 d'une enveloppe 4, communiquant dans sa partie inférieure avec un silo, non représenté, contenant une substance en grains ou poudre, à travers une ouverture inférieure correspondante 5: chacun des dits filtres 2 tubulaires étant doté d'une extrémité inférieure 2a fermée, résidant au-dessous de la plaque 3, et d'une extrémité supérieure 2b ouverte, résidant au-dessus de la dite plaque.

Au-dessus de la plaque 3, l'enveloppe 4 est dotée d'une bouche de décharge 5a pour consentir l'écoulement dans l'atmosphère d'un fluide de processus F, ou de transport, en général de l'air pressurisé, après son passage à travers l'ouverture inférieure 5 et les filtres tubulaires 2 où sont retenues les particules polluantes.

Entre la plaque 3 et l'extrémité supérieure de l'enveloppe 4, doté d'un couvercle 6, est monté un ensemble de soupapes de distribution 7, montées en paquet, dotée chacune d'un conduit de distribution 22, ou éjecteur, d'un fluide F1 de lavage, chaque conduit donnant sur l'extrémité supérieure ouverte d'un filtre correspondant à manches 2 et orienté vers elle: l'extrémité inférieure de chaque conduit de distribution 22 peut fonctionner grâce à un tube de Venturi 8, soutenu à l'extrémité supérieure 2b du filtre 2 correspondant, pour accélerer le fluide F1 lorsque celui-ci est éjecté grâce aux soupapes de distribution 7 vers les filtres 2.

Le paquet de soupapes de distribution 7 est doté, à une des extrémités, d'un couvercle de fermeture 9 et, à l'extrémité opposée, d'un conduit d'alimentation 10 du fluide de lavage F1, à une pression programmée qui puisse consentir le nettoyage des filtres 2 situés en dessous.

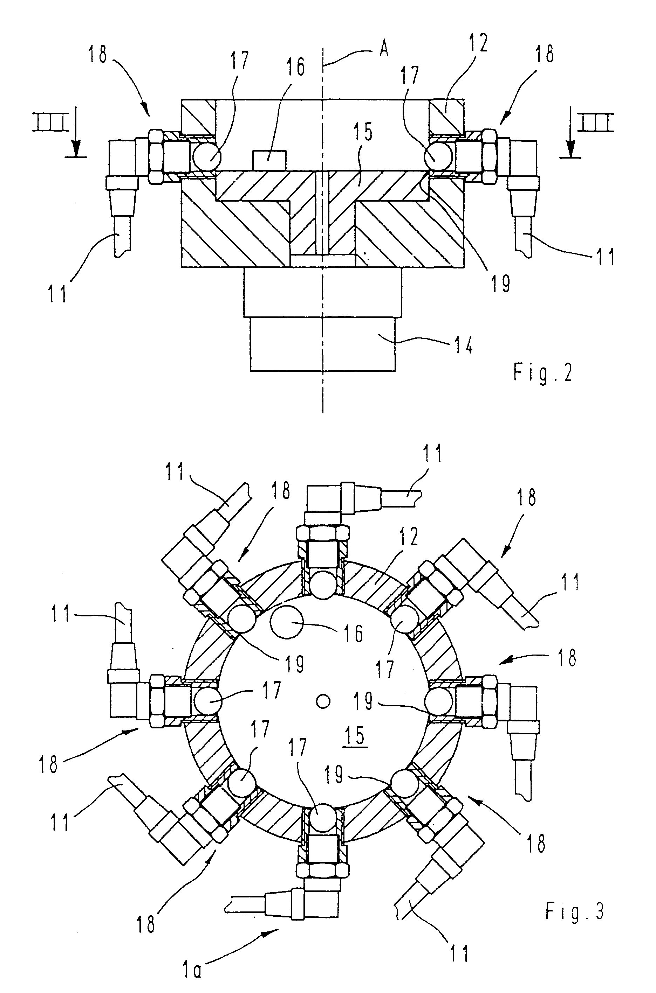

Chaque soupape de distribution 7 est connectée, grâce à un conduit 11, au corps 12 creux d'un distributeur 13, doté de moyens d'actionnement 14 d'un rotor 15 (Figure 2), ayant la forme d'un disque, soutenu de façon tournante à l'intérieur du dit corps creux.

Le rotor 15 est doté d'un prolongement 16 destiné à interférer avec chacun des éléments obturateurs flottants 17, par exemple ayant une forme sphérique, inséré un par un dans les soupapes d'interception 18 correspondantes fixées sur la paroi latérale du corps creux 12 du distributeur 13. Au cours de la rotation du disque 15 autour de son propre axe vertcal A dans la direction indiquée par la flèche B, le prolongement 16 interfère avec chacun des éléments obturateurs 17, dépassant vers l'extérieur loin du logement correspondant 19 de la soupape d'interception 18 correspondante: ceci entraîne la liaison avec l'extérieur du conduit 11 conduisant à cette soupape d'interception, avec des conséquences fonctionnelles qui seront décrites ci-après.

Ainsi que le montre la Figure 3, la distribution des soupapes 18 sur la paroi latérale du corps creux 12 du distributeur 13 peut être en éventail, consentant ainsi d'obtenir une avantaguese économie de place et une structure beacoup plus compacte.

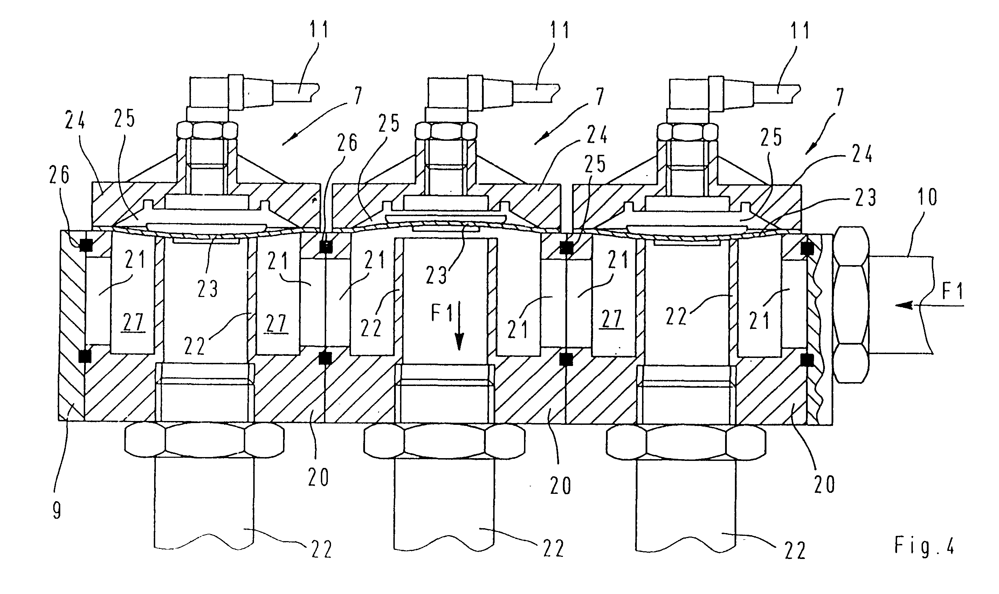

Ainsi que le montre la Figure 4 , chaque soupape 7 est dotée d'une enveloppe 20 creuse dotée de deux ouvertures latérales opposées, ou entrées, 21 afin de faire communiquer entre elles les soupapes 7 adjacentes.

Chaque corps 20 creux se prolonge dans la partie interne du conduit de distibution 22 du fluide de lavage F1, rendu coopérant dans la partie supérieure grâce à une membrane obturatrice élastique 23 soutenue dans sa périphérie entre le bord supérieur de l'enveloppe 20 et un couvercle 24 correspondant, la dite membrane étant flottante dans une chambre 25 auxiliaire définie entre chaque couvercle et l'extrémité supérieure de la partie interne 22 du conduit de distribution 8.

Entre chaque enveloppe 20 et l'enveloppe précédente, ou successive, ainsi qu' entre l'enveloppe 20 d'extrémité et l'élément de fermeture 9, un joint 26 est présent.

Entre la partie interne 22 et l'enveloppe 20 une chambre annulaire 27 est définie dans chaque soupape: l'ensemble des chambres annulaires constitue un réservoir de fluide de lavage F1, intégré dans l'ensemble des corps des soupapes 7 de distribution.

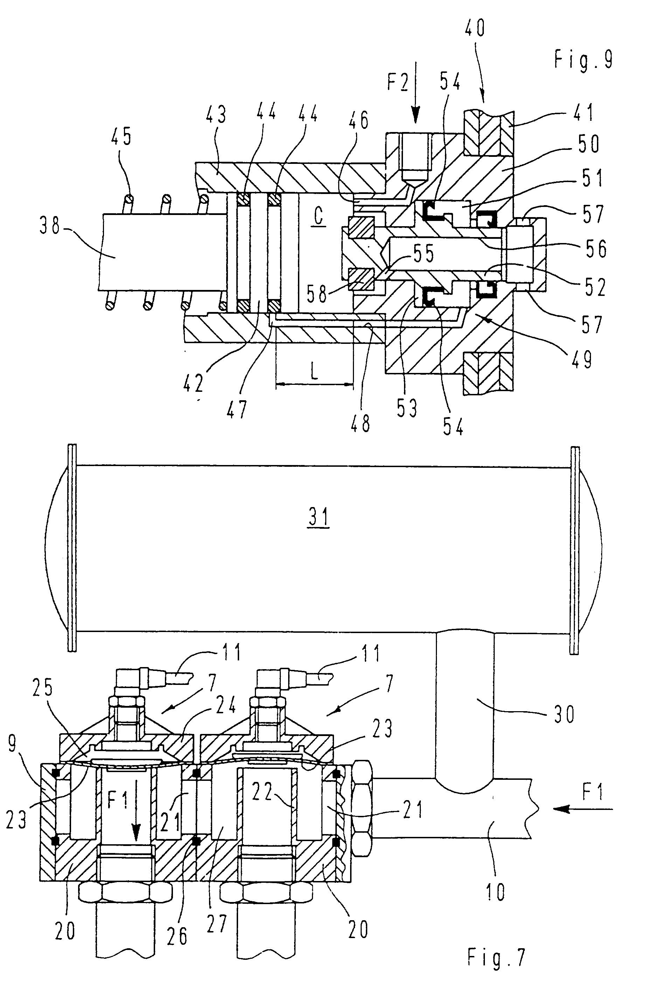

Ainsi que le montre la Figure 7, à partir du conduit d'alimentation 10, on peut obtenir un collecteur 30 d'alimentation d'un réservoir auxiliaire 31 du fluide de lavage F1; le réservoir 30 peut être utilisé là où il est nécessaire d'augmenter la capacité du réservoir obtenu dans le corps des soupapes 20, ce qui peut être le cas en particulier lorsque un petit nombre de soupapes 7 montées en paquet est prévu.

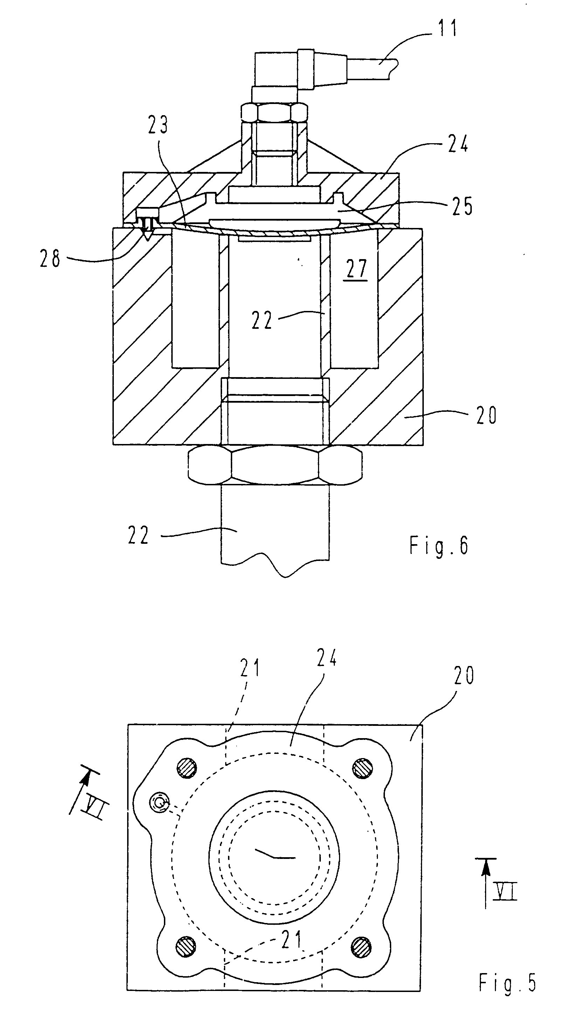

Dans des conditions de repos, la chambre auxiliaire 25 est maintenue à la même pression que le réservoir constitué par l'ensemble des chambres annulaires 27 au moyen d'un trou calibré 28 (figure 6) de petit diamètre, pratiqué dans chaque membrane 23 à proximité du bord périphérique d'ancrage correspondant; par conséquent, même dans chaque conduit 11 il règne, dans des conditions stationnaires, le même régime de pression présent dans l'ensemble des dites chambres annulaires 27.

En fonctionnement, quand on fait rentrer un élément obturateur flottant 17 grâce à l'intervention sur ce dernier du prolongement 16 du rotor 15, la pression dans le conduit 11 qui lui est associé, ainsi que la pression dans les chambres auxiliaires correspondantes 25, baisse brusquement provoquant ainsi le soulèvemnt de la membrane 23 (voire la soupape central dans la figure 4) et consentant le passage du fluide de lavage F1 contenu dans l'ensemble des chambres 27 annulaires vers le conduit 22 de distribution sous-jacent.

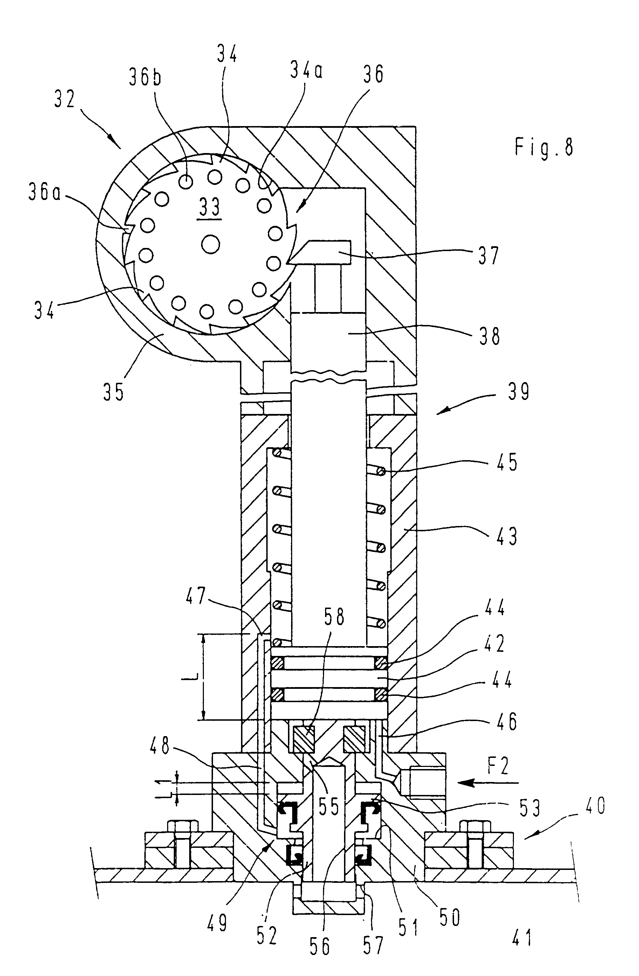

Ainsi que le montre la Figure 8, les moyens d'actionnement des moyens de distribution 13 peuvent être constitués par un encliquetage 32 comprenant une roue 33 à dents de scie 34, de préférence insérée en forçant légèrement dans une cavité 34a d'une enveloppe 35 de laquelle elles dépassent seulement dans une zone 36 ouverte de l'enveloppe-même au niveau de laquelle elles sont situées en face de, ou engagées avec, un élément d'entrainement 37, à coin, dont est dotée une tige 38 des moyens pneumatiques alternatifs 39 dotés d'une flasque 40 de fixation à une plaque 41 du chassis.

L'enveloppe 35 est en outre dotée d'une dent 36a d'anti-retour, destinée à empêcher le mouvement arrière de la roue 33, en sens contraire des aiguilles d'une montre dans la Figure 8, alors qu'elle consent le mouvement dans le sens des aiguilles d'une montre de la roue elle-même, par effet de la déformation élastique des dents 34 obtenue grâce aux trous 36b obtenu dans le corps de la roue 33 au niveau des dents-mêmes. Dans ce but, le corps de la roue 33 est avantaguesement réalisé en matière plastique.

Les moyens pneumatiques alternatifs 39 comprennent un piston 42, connecté de manière rigide à la tige 38 et glissant dans un cylindre 43 étanche grâce à l'intervention de joints périphériques 44. Le piston 42 est contrasté sur une de ses faces par des moyens élastiques 45, par exemple un ressort hélicoïdal, l'autre face délimitant axialement une chambre d'accumulation C, Figure 9, à laquelle conduit une entrée 46 d'un fluide de commande F2, avantaguesement de l'air pressurisé. Quand le fluide de commande F2 est introduit dans la chambre C à travers l'entrée 46, le piston 42 avance contre l'action des moyens de rallentissement 45 jusqu'à découvrir un passage 47 de décharge communiquant avec un conduit 48 de pilotage d'une soupape de décharge 49 de la chambre d'accumulation C, la dite soupape de décharge 49 étant avantageusement obtenue dans la tête 50 de fermeture d'une des extrémités du cylindre 43, en particulier celle à travers laquelle est introduit le fluide de commande F2.

La distance L entre la face interne de la dite tête et la lumière 47 de décharge définit la longueur de la course du piston 42.

Quand le piston 42 a découvert la lumière 48 après avoir parcouru la course L, le fluide de commande F2 conduit à travers le conduit 48 à une chambre 51 de pilotage dans laquelle est logé un piston 52 de pilotage, constituant un élément sensible de soupape de décharge 49. Le piston 52 de pilotage est poussé par le fluide de commande F2 vers l'intérieur du cylindre 43 par une course L1 correspondant à la distance comprise entre une saillie annulaire 53 dont est doté le piston de pilotage, doté de joint 54 étanche sur la chambre 51, et un épaulement prévu à l'extrémité plus interne de la chambre de pilotage 51.

Après avoir accompli la course L1, le piston 52 de pilotage se trouve dans une position avancée dans laquelle au moins un conduit de raccord 55, ou bien avantageusenment un ensemble de trou de raccord duquel (desquels) il est (ils sont) doté(s) à l'avance met(tent) en communication la chambre C avec un trou 56 prévu au centre du piston 52 de pilotage et, grâce à ce dernier, avec l'extérieur à travers un ensemble de trous 57 d'écoulement.

Donc le piston 42, après avoir arrêté sa course en avant repart en arrière jusqu'à atteindre la position de départ à l'intérieur du cylindre 43 sous la poussée du ressort 45 de contraste, faisant ainsi reprendre sa position initiale au piston de pilotage 52 avec le trou de raccord 55 qui ne communique pas avec la chambre C.

On observe que pendant l'avancement du piston 42, le piston de pilotage reste immobile dans sa position initiale et le fluide de commande F2 reste confiné dans la chambre C grâce aussi à un joint 58 placé entre l'extrémité avant du piston de pilotage 42 et le fond de la chambre C.

En utilisant des moyens pneumatiques alternatifs 39 il est donc possible d'obtenir, à parir d'une alimentation du fluide de commande F2 à la pression et à la portée pratiquement constantes, un actionnement intermittent à impulsion de la tige 38.

Dans la mise en pratique, les matériels, les dimensions, les détails d'exécution pourront être différents de ceux indiqués, mais équivalents du point de vue technique, sans pour cela sortir du domanine juridique de la présente invention.

On observe que, bien que les moyens d'actionnement pneumatiques 39 soient décrits en référence au déplacement de la roue 33 afin d'obtenir la rotation intermitente des moyens de distribution 13, ces moyens d'actionnement pneumatiques peuvent également être insérés dans un autre contexte, là où un actionnement alternatif à impulsion est demandé.

## Revendications

1. Système pour le nettoyage d'éléments filtrants tubulaires, comprennent un ensemble des soupapes (7) chacune dotée de son conduit (8) de distribution d'un fluide (F1) de lavage orientés chacun vers l'extrémité (2a, 2b) d'un élément filtrant tubulaire correspondant (2). le dit fluide de lavage (F1) étant contenu dans un réservoir, **caractérisé par le fait que** la structure du dit réservoir est à éléments et comprend un ensemble d'éléments de réservoir communiquant entre eux et associés chacun à un corps (20) de soupape d'une soupape (7) correspondante.

2. Système selon la revendication 1, **caractérisé par le fait qu'**il est muni d'un reservoir suplémentaire (31), ayant des dimensions standardisées et communiquant avec le dit réservoir du fluide de lavage.

3. Système selon une des revendications précédentes, **caractérisé par** le fait le dit réservoir est le résultat du montage à paquet des dits corps de soupape (20).

4. Système selon une des revendications précédentes, **caractérisé par le fait que** chacune des dites soupapes (7) de distribution présente deux entrées (21) et une sortie du fluide de lavage: le dit élément de réservoir étant installé entre les dits deux entrées (21) et communiquant avec elles.

5. Système selon une des revendications précédentes **caractérisé par le fait que** chaque élément de réservoir est obtenu au niveau d'une chambre annulaire (27) obtenue en position coaxiale externe par rapport à un conduit de distribution (22) du fluide de lavage (F1), la dit chambre annulaire (27) étant dotée d'au moins une ouverture (21) pour le passage du fluide de lavage de et vers une chambre annulaire (27) correspondante d'au moins une autre soupape analogue (7) adjacente.

6. Système selon une revendication précédente **caractérisée par le fait que** le dit conduit de distribution (22), du fluide de lavage F1 présente une extrémité interne qui peut communiquer avec la dite chambre annualaire(27).

7. Système selon la revendication précédente **caractérisé par le fait que** entre la dite chambre annulaire (27) et la dite extrémité interne est installée une membrane élastique (23) obturatrice du dit conduit (22) de distribution, qui peut être actionné de manière pneumatique en s'éloignant de la dit extrémité pour consentir le passage du fluide de lavage contenu dans l'ensemble des dites chambres annulaires (27).

8. Système selon la revendication précédente **caractérisé par le fait que** la membrane obturatrice (23) est rendue flottante dans une chambre auxiliaire (25) dotée de moyens de connection (11) à moyens de distribution pneumatiques (13) éloignés comprenant un ensemble de soupapes d'interception (18) dotées chacune d'un élément d'interception (17) flottant.

9. Système selon la revendication précédente **caractérisé par le fait que** les dits moyens de distibution sont constitués par un rotor (15) jumelé à des moyens d'actionnement (14) et doté d'un prolongement (16) destiné à interférer successivement aux moyens d'interception (17) de chaque soupape d'interception (18).

10. Système selon la revendication précédente cractérisé par le fait les dits moyens d'actionnement (14) sont constitués par un cinématisme à encliquetage (32) associé à des moyens pneumatiques alternatifs (39).

11. Système selon la revendication précédente **caractérisé par le fait que** le dit cnématisme à encliquetage (32) est constitué par une roue (33) munie à sa périphérie, de dents (34) déformables insérées de manière élastique en forçant légèrement dans une enveloppe correspondante (35) de laquelle dépasse un élément anti-retour (36a) interférant avec les dents (34) de la dite roue.

12. Système selon la revendication 11, **caractérisé par le fait que** l'enveloppe (35) est dotée d'une ouverture (36) pour le jumelage à travers celle-ci de la dite roue (33) avec un élément en coin (37) dont est dotée l'extrémité d'une tige (38) dont sont dotés les dits moyens pneumatiques alternatifs (39).

13. Système selon la revendication 11, **caractérisé par le fait que** les dents (34) de la dite roue (33) sont radialement rendus élastiques grâce à un ensemble de trous (36b) pratiqués dans le corps de la roue (33) à la base de chaque dent (34).

14. Système selon une des revendications 10 à 13 **caractérisé par le fait que** les dits moyens pneumatiques alternaitfs (39) comprennent un cylindre pneumatique (43) avec piston (42) placé entre les moyens élastiques de contraste (45) et une chambre (C) d'accumulation du fuide de commande (F2); la dite chambre (C) d'accumulation étant munie au niveau d'une section axiale correspondant à la course (L) maximum du piston, d'un passage (47) d'écoulement du fluide (F2) de commande hors de la dite chambre (C) pour le pilotage d'une soupape de décharge (49) du fluide (F2) de commande hors de la chambre C elle-même.

15. Système selon la revendication précédente, **caractérisé par le fait que** le dit passage (47) d'écoulement peut communiquer grâce à un conduit (48) de pilotage, avec une chambre (51) de pilotage, dans laquelle est jumelé de manière étanche et glissant axialement un piston (52) de pilotage, doté d'un trou de décharge (57) qui peut communiquer avec la chambre C d'accumulation.

16. Système selon la revendication précédente **caractérisé par le fait que** le dit piston (52) de pilotage est mobile entre une position initiale dans laquelle le dit trou de décharge (57) ne communique pas avec la dit chambre d'accumulation (C) et une position finale, dans laquelle le dit trou de décharge (57) communique avec la chambre d'accumulation (C) à travers un trou de raccord (56).

## Patentansprüche

1. System zum Reinigen von rohrförmigen Filterelementen, umfassend eine Gesamtheit von Ventilen (7), die jeweils mit ihrer Verteilungsleitung (8) für ein Waschfluid (F1) versehen und jeweils zum Ende (2a, 2b) eines entsprechenden rohrförmigen Filterelements (2) ausgerichtet sind, wobei das Waschfluid (F1) in einem Behälter enthalten ist, **dadurch gekennzeichnet, dass** die Struktur des Behälters Elemente aufweist und eine Gesamtheit von Behälterelementen umfasst, die miteinander in Verbindung stehen und jeweils mit einem Ventilkörper (20) eines entsprechenden Ventils (7) verbunden sind.

2. System nach Anspruch 1, **dadurch gekennzeichnet, dass** es mit einem zusätzlichen Behälter (31) versehen ist, der standardisierte Abmessungen aufweist und mit dem Behälter des Waschfluids in Verbindung steht.

3. System nach einem der vorhergehenden Ansprüche, **dadurch gekennzeichnet, dass** der Behälter das Ergebnis der paketförmigen Montage der Ventilkörper (20) ist.

4. System nach einem der vorhergehenden Ansprüche, **dadurch gekennzeichnet, dass** jedes der Verteilungsventile (7) zwei Eingänge (21) und einen Ausgang für das Waschfluid aufweist, wobei das Behälterelement zwischen den beiden Eingängen (21) installiert ist und mit ihnen in Verbindung steht.

5. System nach einem der vorhergehenden Ansprüche, **dadurch gekennzeichnet, dass** jedes Behälterelement im Bereich einer ringförmigen Kammer (27) erhalten wird, die in äußerer koaxialer Position in Bezug auf eine Verteilungsleitung (22) des Waschfluids (F1) erhalten wird, wobei die ringförmige Kammer (27) mit mindestens einer Öffnung (21) für den Durchgang des Waschfluids von und zu einer entsprechenden ringförmigen Kammer (27) von mindestens einem weiteren angrenzenden analogen Ventil (7) versehen ist.

6. System nach einem der vorhergehenden Ansprüche, **dadurch gekennzeichnet, dass** die Verteilungsleitung (22) des Waschfluids (F1) ein inneres Ende aufweist, das mit der ringförmigen Kammer (27) in Verbindung stehen kann.

7. System nach dem vorhergehenden Anspruch, **dadurch gekennzeichnet, dass** zwischen der ringförmigen Kammer (27) und dem inneren Ende eine elastische Membran (23) zum Verschließen der Verteilungsleitung (22) eingebaut ist, die pneumatisch betätigt werden kann, wobei sie sich von dem Ende entfernt, um den Durchgang des in der Gesamtheit der ringförmigen Kammern (27) enthaltenen Waschfluids zu gestatten.

8. System nach dem vorhergehenden Anspruch, **dadurch gekennzeichnet, dass** die Verschlussmembran (23) in einer Nebenkammer (25) pendelnd ausgeführt ist, die mit Anschlussmitteln (11) an entfernte pneumatische Verteilungsmittel (13) versehen ist, umfassend eine Gesamtheit von Abfangventilen (18), die jeweils mit einem pendelnden Abfangelement (17) versehen sind.

9. System nach dem vorhergehenden Anspruch, **dadurch gekennzeichnet, dass** die Verteilungsmittel von einem Rotor (15) gebildet sind, der mit Betätigungsmitteln (14) verbunden und mit einer Verlängerung (16) versehen ist, die dazu bestimmt ist, nacheinander in die Abfangmittel (17) jedes Abfangventils (18) einzugreifen.

10. System nach dem vorhergehenden Anspruch, **dadurch gekennzeichnet, dass** die Betätigungsmittel (14) von einem Rastmechanismus (32) gebildet sind, der mit alternativen pneumatischen Mitteln (39) verbunden ist.

11. System nach dem vorhergehenden Anspruch, **dadurch gekennzeichnet, dass** der Rastmechanismus (32) von einem Rad (33) gebildet ist, das an seiner Peripherie mit verformbaren Zähnen (34) versehen ist, die elastisch eingesetzt werden, indem sie leicht in eine entsprechende Hülle (35) gedrückt werden, aus der ein Rückschlagelement (36a) vorragt, das in die Zähne (34) des Rades eingreift.

12. System nach Anspruch 11, **dadurch gekennzeichnet, dass** die Hülle (35) mit einer Öffnung (36) zur Verbindung des Rades (33) mit einem Winkelelement (37) durch sie versehen ist, mit dem das Ende einer Stange (38) verbunden ist, mit der die alternativen pneumatischen Mittel (39) versehen sind.

13. System nach Anspruch 11, **dadurch gekennzeichnet, dass** die Zähne (34) des Rades (33) radial elastisch sind, dank einer Gesamtheit von Löchern (36b), die im Körper des Rades (33) an der Basis jedes Zahns (34) vorgesehen sind.

14. System nach einem der Ansprüche 10 bis 13, **dadurch gekennzeichnet, dass** die alternativen pneumatischen Mittel (39) einen Druckluftzylinder (43) mit Kolben (42) umfassen, der zwischen den elastischen Kontrastmitteln (45) und einer Speicherkammer (C) des Steuerfluids (F2) angeordnet ist, wobei die Speicherkammer (C) im Bereich eines dem maximalen Hub (L) des Kolbens entsprechenden Axialquerschnitts mit einem Ableitungsdurchgang (47) für das Steuerfluid (F2) aus der Kammer (C) zur Steuerung eines Ableitungsventils (49) des Steuerfluids (F2) aus der Kammer (C) selbst versehen ist.

15. System nach dem vorhergehenden Anspruch, **dadurch gekennzeichnet, dass** der Ableitungsdurchgang (47) über eine Steuerleitung (48) mit einer Steuerkammer (51) in Verbindung stehen kann, in der dicht und axial gleitend ein Steuerkolben (52) angeschlossen ist, der mit einem Ableitungsloch (57) versehen ist, das mit der Speicherkammer (C) in Verbindung stehen kann.

16. System nach dem vorhergehenden Anspruch, **dadurch gekennzeichnet, dass** der Steuerkolben (52) zwischen einer Ausgangsposition, in der das Ableitungsloch (57) nicht mit der Speicherkammer (C) in Verbindung steht, und einer Endposition beweglich ist, in der das Ableitungsloch (57) mit der Speicherkammer (C) über ein Anschlussloch (56) in Verbindung steht.

## Claims

1. A system for cleaning tubular filter elements, comprising an assembly of valves (7), each equipped with a fluid distribution conduit (F1) each oriented toward the extremity (2a, 2b) of a corresponding tubular filter element (2), said cleaning fluid (F1) being contained in a reservoir, **characterized by** the fact that the structure of said reservoir is in elements and comprises an assembly of intercommunicating reservoir elements and each associated to a body (20) of a corresponding valve (7).

2. The system according to claim 1, **characterized by** the fact that the system is equipped with a supplementary reservoir (31), having standardized dimensions and communicating with said cleaning fluid reservoir.

3. The system according to one of the previous claims, **characterized by** the fact that said reservoir is the result of the assembly of a group of said valve bodies (20).

4. The system according to one of the previous claims, **characterized by** the fact that each of said distribution valves (7) presents two inputs (21) and one output for the cleaning fluid: said reservoir element being installed between said two inputs (21) and communicating with them.

5. The system according to one of the previous claims, **characterized by** the fact that each reservoir element is obtained at the level of an annular chamber (27) obtained in an external coaxial position with relation to a distribution conduit (22) for the cleaning fluid (F1), said annular chamber (27) being equipped with at least one opening (21) for the passage of the cleaning fluid from and to a corresponding annular chamber (27) of at least one other adjacent analogous valve (7).

6. The system according to a previous claim, **characterized by** the fact that said distribution conduit (22) of the cleaning fluid F1 presents an internal extremity that may communicate with said annular chamber (27).

7. The system according to the previous claim, **characterized by** the fact that between said annular chamber (27) and said internal extremity is installed an elastic shutter membrane (23) of said distribution conduit (22), that may be activated pneumatically by moving away from said extremity to allow the passage of cleaning fluid contained in the assembly of said annular chambers (27).

8. The system according to the previous claim, **characterized by** the fact that the shutter membrane (23) is rendered flappable in an auxiliary chamber (25) equipped with means (11) for connection to the far pneumatic distribution means (13) comprising an assembly of interception valves (18) each equipped with a flapping interception element (17).

9. The system according to the previous claim, **characterized by** the fact that said distribution means are comprised of a rotor (15) coupled to the activating means (14) and equipped with an extension (16) designed to successively interfere with the interception means (17) of each interception valve (18) .

10. The system according to the previous claim **characterized by** the fact that said activation means (14) are comprised of a kinematic lock (32) associated with reciprocating pneumatic means (39).

11. The system according to the previous claim **characterized by** the fact that said kinematic lock (32) is comprised of a wheel (33) equipped at its periphery with deformable teeth (34) inserted elastically by lightly forcing into a corresponding envelope (35) from which projects an anti-return element (36a) interfering with the teeth (34) of said wheel.

12. The system according to claim 11, **characterized by** the fact that the envelope (35) is equipped with an opening (36) for coupling a wedge element (37) across the opening of said wheel (33), the wedge element is equipped with the extremity of a rod (38) of which are equipped said reciprocating pneumatic means (39).

13. The system according to claim 11, **characterized by** the fact that the teeth (34) of said wheel (33) are radially rendered elastic due to an assembly of holes (36b) made in the body of the wheel (33) at the base of each tooth (34).

14. The system according to one of claims 10 to 13 **characterized by** the fact that said reciprocating pneumatic means (39) comprise a pneumatic cylinder (43) with a piston (42) placed between the elastic contrast means (45) and an accumulation chamber (C) for control fluid (F2); said accumulation chamber (C) being equipped at the level of an axial section corresponding to the maximum course (L) of the piston, with a flow passage (47) for the control fluid (F2) out of said chamber (C) for navigating a discharge valve (49) for the control fluid (F2) out of chamber C itself.

15. The system according to the previous claim, **characterized by** the fact that said flow passage (47) may communicate due to a navigating conduit (48) with a navigating chamber (51), in which is coupled in a sealed and axially sliding manner a navigating piston (52), equipped with a discharge hole (57) that may communicate with accumulation chamber C.

16. The system according to the previous claim, **characterized by** the fact that said navigating piston (52) is mobile between an initial position in which the said discharge hole (57) does not communicate with said accumulation chamber (C) and a final position, in which said discharge hole (57) communicates with the accumulation chamber (C) across a connection hole (56).
